Europäisches Patentamt

European Patent Office

Office européen des brevets

(19)

(11) Numéro de publication : **0 122 194**
**B1**

(12) **FASCICULE DE BREVET EUROPÉEN**

(45) Date de publication du fascicule du brevet :
29.07.87

(51) Int. Cl.⁴ : **F 16 K 17/19**

(21) Numéro de dépôt : **84400665.0**

(22) Date de dépôt : **04.04.84**

(54) **Soupape hydraulique pour faibles différences de pression de gaz.**

(30) Priorité : **08.04.83 FR 8305788**

(43) Date de publication de la demande :
**17.10.84 Bulletin 84/42**

(45) Mention de la délivrance du brevet :
**29.07.87 Bulletin 87/31**

(84) Etats contractants désignés :
**BE DE GB IT NL**

(56) Documents cités :
**DE-B- 1 142 325**
**FR-A- 1 582 618**
**GB-A-   155 612**
**US-A- 1 874 742**
**US-A- 2 252 174**

(73) Titulaire : **NOVATOME**
**La Boursidière R.N. 186**
**F-92357 Le Plessis Robinson (FR)**

(72) Inventeur : **Rouquette, Yves**
**154 rue Charles de Gaulle**
**F-91440 Bures-sur-Yvette (FR)**

(74) Mandataire : **Polus, Camille et al**
**c/o Cabinet Lavoix 2, Place d'Estienne d'Orves**
**F-75441 Paris Cedex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention se rapporte à une soupape hydraulique pour faibles différences de pression de gaz.

Il est bien connu dans des installations mettant en œuvre des gaz sous pression, d'utiliser des soupapes qui limitent la pression à une valeur déterminée, toute surpression au-dessus de cette pression déterminée se traduisant par un échappement de gaz.

Généralement, ces soupapes comportent un clapet mobile rappelé par un ressort qui s'oppose à la pression du gaz et, qui ferme un orifice d'échappement. Si la différence de pression, entre l'amont et l'aval de la soupape, s'exerçant sur le clapet devient supérieure au tarage du ressort, celui-ci s'ouvre et laisse échapper le gaz. Mais ces soupapes sont peu fiables, et donnent surtout une erreur sur la pression d'ouverture importante, et cela d'autant plus que la différence de pression est faible, ce qui bien entendu constitue un inconvénient extrêmement gênant pour un dispositif de sécurité.

Par ailleurs, il est également connu d'utiliser une colonne de liquide pour équilibrer une pression de gaz et pour faire office de ressort, le clapet étant alors le liquide lui-même.

Toutefois, l'utilisation d'une colonne de liquide comme clapet présente des inconvénients. En effet, il se produit un entraînement du liquide par le gaz à contrôler et même une projection plus ou moins complète. Or ce liquide peut être indésirable en aval de la soupape et son élimination totale ou partielle de ladite soupape modifiera, après une première utilisation, ses caractéristiques de fonctionnement et entraînera éventuellement sa mise hors usage.

On connaît dans le FR-A-1.582.618, une soupape hydraulique comportant un conduit en communication constante avec le circuit à protéger et, à la partie inférieure de ce conduit, plusieurs tubes de fuite en U dont l'une des branches débouche dans ledit conduit tandis que l'autre, qui est recourbée latéralement, ouvre dans un récipient rempli de liquide.

On connaît également dans le US-A-2.252.174 une soupape hydraulique comprenant un réservoir muni d'une virole interne de séparation, descendant jusqu'à un niveau situé au-dessus du fond du réservoir et séparant le volume interne dudit réservoir en une colonne centrale et une colonne périphérique.

L'invention concerne donc une soupape hydraulique qui évite les inconvénients précités et notamment la perte du liquide d'obturation, tout en permettant de résoudre le problème de la séparation du mélange gaz-liquide et surtout d'éviter la perte du liquide d'obturation et ceci dans les deux sens correspondant au cas où la pression détectée dans le tuyau de prise de pression est supérieure à la pression dans le tuyau d'évacuation et inversement.

L'invention a ainsi pour objet une soupape hydraulique pour limiter une pression de gaz à une valeur prédéterminée comportant d'une part au moins un réservoir contenant un liquide sur le niveau supérieur duquel s'exerce la pression du gaz, ledit réservoir étant constitué par une enveloppe externe cylindrique comportant une virole interne également cylindrique de séparation descendant jusqu'à un niveau situé au-dessus du fond du réservoir et séparant le volume interne dudit réservoir en une colonne centrale et une colonne périphérique, et d'autre part, au-dessus dudit réservoir, une chambre communiquant avec l'une des colonnes du réservoir de liquide, caractérisée par le fait que la chambre est divisée en deux compartiments distincts disposés l'un au-dessus de l'autre communiquant chacun d'un côté avec l'une des colonnes du réservoir et de l'autre côté avec un tuyau d'échappement et comprenant chacun des moyens de séparation du mélange gaz-liquide et de récupération du liquide, en cas de dépassement de la pression prédéterminée.

L'invention sera mieux comprise à l'aide de la description suivante se rapportant à un mode de réalisation particulier donné à titre d'exemples et en se référant aux dessins annexés qui représentent :

Figure 1 une coupe axiale d'une soupape hydraulique à double effet conforme à l'invention, montrant le cheminement du gaz dans un sens de fonctionnement de la soupape.

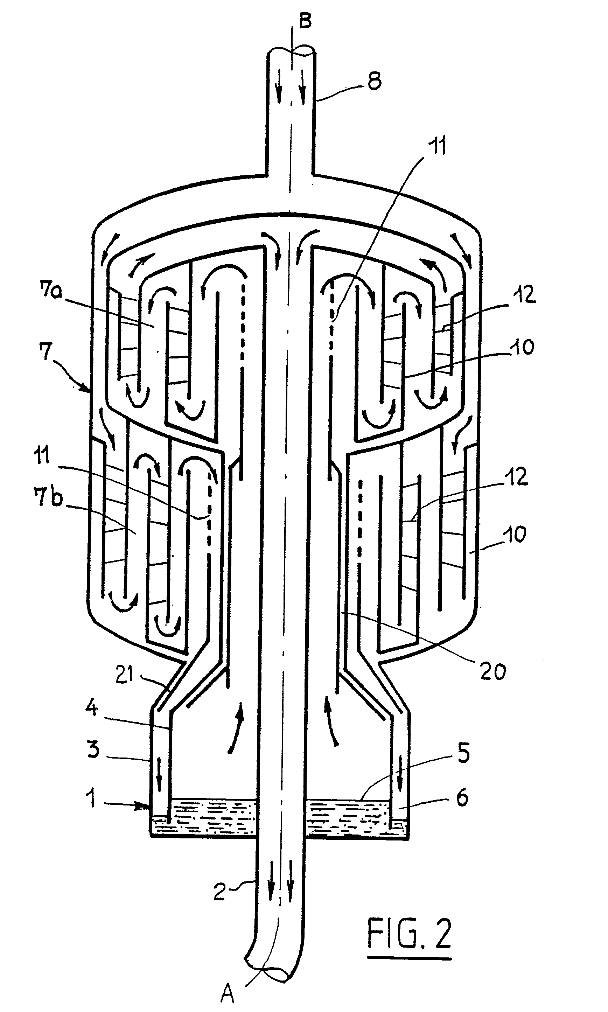

Figure 2 une coupe axiale identique à la figure 1 montrant le cheminement du gaz dans l'autre sens de fonctionnement de la soupape.

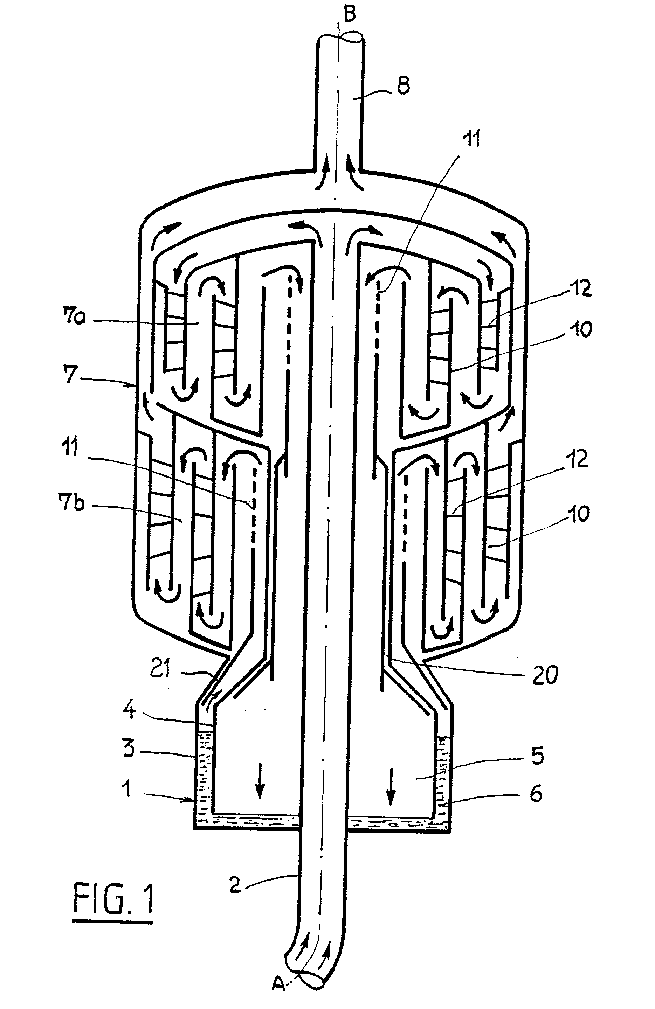

En se reportant tout d'abord à la figure 1, la soupape hydraulique comporte une partie inférieure, constituée par un réservoir cylindrique 1 traversé en son centre par un tuyau vertical 2 qui constitue la prise de pression de la soupape et qui débouche à la partie supérieure de ladite soupape. Entre l'enveloppe externe 3 du réservoir 1 et le tuyau vertical 2 est disposée une virole cylindrique 4 qui descend jusqu'à un niveau situé au-dessus du fond horizontal du réservoir 1. Cette virole cylindrique 4 sépare le volume interne du réservoir 1 en une colonne centrale 5 et une colonne périphérique 6 communiquant entre elles et toutes les deux remplies partiellement d'un liquide dont le rôle est de fermer la soupape au gaz ou de permettre l'évacuation de ce gaz en cas de surpression. La pression du gaz à contrôler s'exerce donc directement sur le niveau de liquide dans la colonne centrale 5.

L'enveloppe externe 3 du réservoir 1 se prolonge vers le haut pour former avec la virole cylindrique 4, une chambre 7 de séparation gaz-liquide et de récupération du liquide, disposée au-dessus du réservoir 1 et communiquant d'une part avec la colonne périphérique 5 et d'autre part, à sa partie supérieure, avec un tuyau d'évacuation 8.

La chambre 7 de séparation gaz-liquide et de récupération du liquide, disposée au-dessus du réservoir 1 est divisée en deux compartiments distincts 7a-7b placés l'un au-dessus de l'autre. Le compartiment supérieur 7a communique d'un côté avec le tuyau 2 d'arrivée de gaz et de l'autre côté avec la colonne centrale 5 du réservoir 1. Le compartiment inférieur 7b communique d'un côté avec la colonne périphérique 6 du réservoir 1 et de l'autre côté avec un tuyau 8 d'arrivée de gaz. Chaque compartiment 7a-7b comporte une série de chicanes verticales 10 et une série de chicanes planes 12 intercalées entre les chicanes verticales. Les chicanes verticales 10 de chaque compartiment, les plus proches de l'arrivée du mélange gaz liquide sont percées sur une partie de leur surface de petits orifices 11 de section ronde ou rectangulaire. Enfin le fond incliné du compartiment supérieur 7a est raccordé avec la colonne centrale 5 du réservoir 1 par un petit canal annulaire 20, et le fond incliné du compartiment inférieur 7b avec la colonne périphérique 6 par un petit canal annulaire 21.

Le fonctionnement de la soupape à double effet décrite ci-dessus est le suivant :

En l'absence de pression, le liquide contenu dans le réservoir 1 est au même niveau dans la colonne centrale 5 et la colonne périphérique 6.

Si la pression détectée en A par le tuyau 2 (figure 1) est supérieure à la pression en B, le liquide va descendre dans la colonne centrale 5 et monter dans la colonne périphérique 6.

Si cette différence de pression dépasse une certaine valeur, telle que le niveau de liquide atteigne et dépasse légèrement la partie inférieure de la virole 4, le mélange gaz-liquide va s'échapper et traverser le compartiment inférieur 7b. Le cheminement du mélange dans le compartiment 7b est donc ascendant, descendant, hélicoïdal et ainsi de suite, ce qui provoque une séparation du liquide avec le gaz. Le gaz s'échappe par le tuyau 8 en contournant le compartiment supérieur 7a, tandis que le liquide ainsi recueilli, redescend par gravité dans la colonne périphérique 6 du réservoir 1 par le petit canal 21.

Inversement, si la pression détectée en B par le tuyau 8 (figure 1) est supérieure à la pression en A, le liquide va descendre dans la colonne périphérique 6 et monter dans la colonne centrale 5. Si cette différence de pression dépasse une certaine valeur, le mélange gaz-liquide va traverser le compartiment supérieur 7a, provoquant ainsi une séparation du liquide avec le gaz. Le gaz s'échappe donc par le tuyau 2, et le liquide redescend dans le réservoir 1 par le petit canal 20.

Cette soupape à double effet trouve plus particulièrement son application dans les réacteurs à neutrons rapides.

En effet, dans ces derniers, le sodium de la cuve principale est surmonté d'un gaz neutre en général de l'argon qui doit être épuré par suite de la présence d'aérosols de sodium et de produits de fission. Du gaz est donc prélevé, dans cette partie supérieure appelée ciel de pile, et après filtration passe dans des réservoirs, puis dans un piège d'épuration et après recompression est renvoyé dans le ciel de pile.

Toutefois, le niveau de sodium est soumis à des variations de niveau par suite des variations de température, donc des variations volumiques du sodium qui en résultent. Au démarrage, la pression dans le ciel d'argon augmente. Par contre lors d'un arrêt rapide le niveau va redescendre. Une régulation existe, mais si cette dernière tombe en panne, ou si un tuyau de l'épuration vient à se boucher avant le filtre, il est nécessaire de disposer d'un dispositif de sécurité qui évite un dépassement dangereux de la pression dans un sens positif mais aussi négatif. De telles soupapes hydrauliques sont alors indispensables, soit en permettant à l'argon de s'échapper directement par exemple vers les réservoirs du circuit d'épuration, soit au contraire d'admettre du gaz de ces réservoirs dans le ciel de pile. Dans cet exemple d'application, le liquide de fermeture utilisé dans les soupapes est de l'alliage sodium-potassium.

Cette soupape hydraulique à double effet, fonctionne donc dans les deux sens, les pressions d'ouverture dans un sens ou dans l'autre peuvent être égales ou différentes, suivant les volumes des colonnes de liquide du réservoir.

Les liquides de fermeture peuvent être très variés et adaptés par exemple aux conditions de fonctionnement, différences de pression, types de gaz, ou températures. Outre l'alliage de sodium-potassium, le sodium lui-même réchauffé peut-être utilisé, ainsi que des alliages denses à bas point de fusion, du type Darcet, mais aussi du mercure, des huiles silicone, de l'eau ou des liquides organo-métalliques lourds.

De plus, il est souhaitable que les surfaces des chambres de séparation-récupération du liquide aient subi un traitement de surface ou soient telles que le liquide ne mouille pas sur elles.

## ·Revendications

1. Soupape hydraulique pour limiter une pression de gaz à une valeur prédéterminée comportant d'une part au moins un réservoir (1) contenant un liquide sur le niveau supérieur duquel s'exerce la pression du gaz, ledit réservoir (1) étant constitué par une enveloppe externe cylindrique (3) comportant une virole interne également cylindrique (4) de séparation descendant jusqu'à un niveau situé au-dessus du fond du réservoir et séparant le volume interne dudit réservoir en une colonne centrale (5) et une colonne périphérique (6), et d'autre part, au-dessus dudit réservoir (1), une chambre communiquant avec l'une des colonnes (5, 6) du réservoir de liquide, caractérisée par le fait que la chambre (7) est divisée en deux compartiments distincts (7a, 7b) disposés l'un au-dessus de l'autre, communiquant chacun d'un côté avec l'une des colonnes (5, 6) du réservoir (1) et de l'autre côté avec un tuyau d'échappement (2, 8) et comprenant chacun des moyens de séparation du mélange gaz-liquide et de récupération du liquide, en cas de dépassement de la pression prédéterminée.

2. Soupape hydraulique selon la revendication 1, caractérisée par le fait que les moyens de séparation du mélange gaz-liquide et de récupération du liquide sont formés par des chicanes verticales (10) ménageant entre elles un passage alterné vers le haut ou vers le bas.

3. Soupape hydraulique selon la revendication 2, caractérisée par le fait qu'entre les chicanes verticales (10) sont rapportées des chicanes planes (12) légèrement inclinées par rapport à l'horizontale, ne couvrant qu'une portion de tour de la chambre (7) et communiquant au mélange gaz-liquide un mouvement giratoire.

4. Soupape hydraulique selon la revendication 2, caractérisée par le fait que la chicane verticale (10), la plus proche de l'arrivée du mélange gaz-liquide est percée sur une partie de sa surface de petits orifices (11) de section ronde ou rectangulaire.

5. Soupape hydraulique selon la revendication 1, caractérisée par le fait que le fond incliné de la chambre (7) est raccordé par un petit canal annulaire (13) avec la colonne périphérique (6) du réservoir (1).

6. soupape hydraulique selon la revendication 1, caractérisée par le fait que le fond incliné du compartiment supérieur (7a) de la chambre (7) est raccordé par un petit canal annulaire (20) avec la colonne centrale (5) du réservoir (1) et le fond légèrement incliné du compartiment inférieur (7b) par un petit canal annulaire (21) avec la colonne périphérique (6).

7. Soupape hydraulique selon la revendication 1, caractérisée par le fait que les pressions d'ouverture peuvent être différentes et ajustées en faisant varier les sections des colonnes centrales et périphériques (5, 6) du réservoir (1).

8. Soupape hydraulique selon la revendication 1, caractérisée par le fait que le liquide du réservoir (1) est par exemple un alliage sodium-potassium ou un alliage à bas point de fusion, ou du mercure ou encore des huiles silicone, de l'eau, ou des liquides organo-métalliques lourds.

## Claims

1. Hydraulic valve for limiting a gas pressure to a predetermined value comprising, on one hand, at least one reservoir (1) containing a liquid on the upper level of which is exerted the pressure of the gas, said reservoir (1) being constituted by a cylindrical outer case (3) comprising inner also cylindrical separating sleeve (4) descending to a level located above the bottom of the reservoir and separating the internal volume of said reservoir into a central column (5) and a peripheral column (6) and, on the other hand, above said reservoir (1) a chamber communicating with one of the columns (5, 6) of the liquid reservoir, characterised in that the chamber (7) is divided into two distinct compartments (7a, 7b) disposed one above the other, each communicating on one side with one of the columns (5, 6) of the reservoir (1) and on the other side with a discharge pipe (2, 8) and each having means for separating the gas-liquid mixture and recovering the liquid in the case of exceeding the predetermined pression.

2. Hydraulic valve according to claim 1, characterised in that the means for separating the gas-liquid mixture and recovering the liquid are formed by vertical baffles (10) defining therebetween an upwardly and downwardly alternating passage.

3. Hydraulic valve according to claim 2, characterised in that between the vertical baffles (10) are mounted planar baffles (l2) which are slightly inclined relative to the horizontal, covering only a portion of the circumference of the chamber (7) and imparting a giratory motion to the gas-liquid mixture.

4. Hydraulic valve according to claim 2, characterised in that the vertical baffle (10) the closest to the inlet of the gas-liquid mixture is provided on a part of its surface with small orifices (11) of round or square section.

5. Hydraulic valve according to claim 1, characterised in that the inclined bottom of the chamber (7) is connected by a small annular passage (13) with the peripheral column (6) of the reservoir (1).

6. Hydraulic valve according to claim 1, characterised in that the inclined bottom of the upper compartment (7a) of the chamber (7) is connected by a small annular passage (20) with the central column (5) of the reservoir (1) and the slightly inclined bottom of the lower compartment (7b) by a small annular passage (21) with the peripheral column (6).

7. Hydraulic valve according to claim 1, characterised in that the opening pressures may by different and adjusted by varying the sections of the central and peripheral columns (5, 6) of the reservoir (1).

8. Hydraulic valve according to claim 1, characterised in that the liquid of the reservoir (1) is for example sodium-pottasium alloy or an alloy having a low melting point, or mercury or silicone oils, water or heavy organo-metallic liquids.

## Patentansprüche

1. Hydraulisches Ventil zur Begrenzung eines Gasdrucks auf einen vorbestimmten Wert, das einerseits wenigstens einen Behälter (1), der eine Flüssigkeit enthält, auf deren oberes Niveau der Gasdruck einwirkt, welcher Behälter (1) aus einer äußeren zylindrischen Hülle (3) mit einem ebenfalls zylindrischen inneren Trennring (4) zusammengesetzt ist, der bis zu einem über dem Boden des Behälters liegenden Niveau herabreicht und das innere Volumen des Behälters in eine mittlere Säule (5) und eine Umfangssäule (6) unterteilt, und das andererseits oberhalb des Behälters (1) eine mit einer der Säulen (5, 6) des Flüssigkeitsbehälters verbundene Kammer aufweist, dadurch gekennzeichnet, daß die Kammer (7) in zwei besondere, übereinander angeordnete Abteile (7a, 7b) unterteilt ist, deren jedes auf einer Seite mit einer der Säulen (5, 6) des Behälters (1) und auf der anderen Seite mit einem Abzugsrohr (2, 8) verbunden ist und jeweils Mittel zur Trennung des Gas-Flüssigkeit-Gemisches und zur Erfassung der Flüssigkeit im Fall einer Überschreitung des vorbestimmten Drucks aufweist.

2. Hydraulisches Ventil nach dem Anspruch 1, dadurch gekennzeichnet, daß die Mittel zur Trennung des Gas-Flüssigkeit-Gemisches und zur Erfassung der Flüssigkeit aus vertikalen Prallplatten (10) gebildet sind, die zwischen sich einen nach oben oder nach unten abgewechselten Kanal aussparen.

3. Hydraulisches Ventil nach dem Anspruch 2, dadurch gekennzeichnet, daß zwischen den vertikalen Prallplatten (10) flache, gegenüber der Horizontalen leicht geneigte Prallplatten (12) angebracht sind, die nur einen Umlaufteil der Kammer (7) abdecken und dem Gas-Flüssigkeit-Gemisch eine kreisende Bewegung verleihen.

4. Hydraulisches Ventil nach dem Anspruch 2, dadurch gekennzeichnet, daß die dem Einlaß des Gas-Flüssigkeit-Gemisches nächste vertikale Prallplatte (10) auf einem Teil ihrer Oberfläche von kleinen Öffnungen (11) runden oder rechteckigen Querschnitts durchsetzt ist.

5. Hydraulisches Ventil nach dem Anspruch 1, dadurch gekennzeichnet, daß der geneigte Boden der Kammer (7) durch einen kleinen ringförmigen Kanal (21) mit der Umfangssäule (6) des Behälters (1) verbunden ist.

6. Hydraulisches Ventil nach dem Anspruch 1, dadurch gekennzeichnet, daß der geneigte Boden des oberen Abteils (7a) der Kammer (7) durch einen kleinen ringförmigen Kanal (20) mit der mittleren Säule (5) des Behälters (1) und der leicht geneigte Boden des unteren Abteils (7b) durch einen kleinen ringförmigen Kanal (21) mit der Umfangssäule (6) verbunden sind.

7. Hydraulisches Ventil nach dem Anspruch 1, dadurch gekennzeichnet, daß die Öffnungsdrücke verschieden sein und justiert werden können, indem man die Querschnitte der mittleren Säule (5) und der Umfangssäule (6) des Behälters (1) variieren läßt.

8. Hydraulisches Ventil nach dem Anspruch 1, dadurch gekennzeichnet, daß die Flüssigkeit des Behälters (1) beispielsweise eine Natrium-Kalium-Legierung oder eine Legierung niedrigen Schmelzpunkts oder Quecksilber oder auch aus Silikoneölen, Wasser oder schweren organo-metallischen Flüssigkeiten ist.

0 122 194

FIG. 1

B

8

11

7a

12

7

10

11

12

7b

10

20

21

4

3

5

1

6

2

A

FIG. 2